# EUROPEAN PATENT APPLICATION

(11) **EP 4 635 845 A1**
(43) Date of publication of application: **22.10.2025**
(21) Application number: 24315183.4
(22) Date of filing: 16.04.2024
(51) Int. Cl.: B64C 13/28, F16H 25/20

(54) **SYSTEM FOR AN ACTUATOR**

(71) Applicant: Goodrich Actuation Systems SAS, 27950 Saint-Marcel (FR)
(72) Inventor: CHAUSSIVERT, Axel, 95310 Saint Ouen L'Aumone (FR); MEDINA, Raphael, 95310 Saint Ouen L'Aumone (FR)
(74) Representative: Casalonga

(57) **Abstract**

There is provided a system for identifying a failure of the primary load path in an actuator (200). The actuator comprises a screw shaft (210), a static portion (202) fixedly attached to the screw shaft (210) and a nut assembly (400) moveable along the screw shaft (210). The nut assembly (400) is moveable relative to the static portion (202). The nut assembly (400) comprises a primary nut (420) for transmitting load through the actuator (200) along a primary load path, and a secondary nut (440) for transmitting load through the actuator (200) along a secondary load path. The nut assembly (400) is configured such that, in normal operation, the secondary nut (440) is not engaged with the screw shaft (210) and load is transmitted through the actuator (200) along the primary load path, and such that, upon failure of the primary load path, the secondary nut (440) is configured to engage the screw shaft (210) and transmit load through the actuator (200) along the secondary load path. The system comprises a first strain gauge (480a) configured to be mounted to the static portion (200) and to measure vibrations of the static portion (200) and a second strain gauge (480b) configured to be mounted to the nut assembly (400) and to measure vibrations of the nut assembly (420). The system comprises a processor configured to identify a failure of the primary load path by comparing the measured vibrations of the static portion (200) and the measured vibrations of the nut assembly (400). There is also provided a method for identifying a failure of the primary load path in an actuator (200).

## Description

### TECHNICAL FIELD

The present disclosure relates to a system for identifying a failure of the primary load path in an actuator and to an actuator including such a system, for example a trimmable horizontal stabiliser actuator ("THSA") for an aircraft, wherein the actuator includes a primary load path and a secondary load path that is configured to carry the load of the actuator upon failure of the primary load path.

### BACKGROUND

Actuators typically provide a structural link between stationary parts of the actuator (and the object to which the actuator is attached), which provide a driving force for the actuator, and the moving parts of the actuator that actuate a component. Various loads are transmitted from the component to the stationary parts of the actuator via the moving parts thereof. Most actuators provide this structural link in the form of a load path, along which various tolerances are provided between components to account for excessive loading in use.

An example of such an actuator is a trimmable horizontal stabiliser actuator ("THSA") for an aircraft, which is submitted to various aerodynamic loads in use (e.g., flutter caused by turbulence). In some cases, such actuators comprise a primary load path that is configured to support aerodynamic loads in normal condition, and a secondary load path that is configured to support aerodynamic loads upon failure of the primary load path. During normal use, the secondary load path is intended to remain in an unloaded condition.

It is desired to provide means for detecting and / or identifying the failure of the primary load path, and the subsequent loading of the secondary load path.

### SUMMARY

According to a first aspect of the disclosure, there is provided a system for identifying a failure of the primary load path in an actuator. The actuator comprises a screw shaft, a static portion fixedly attached to the screw shaft and a nut assembly moveable along the screw shaft. The nut assembly is moveable relative to the static portion. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The system comprises a first strain gauge configured to be mounted to the static portion and to measure vibrations of the static portion and a second strain gauge configured to be mounted to the nut assembly and to measure vibrations of the nut assembly. The system comprises a processor configured to identify a failure of the primary load path by comparing the measured vibrations of the static portion and the measured vibrations of the nut assembly.

In any example of the disclosure, the processor may comprise a first comparator for comparing the measured vibrations of the static portion and the measured vibrations of the nut assembly.

In any example of the disclosure, the processor may comprise a second comparator for comparing an output from the first comparator with a reference signal to identify failure of the primary load path.

In any example of the disclosure, the processor may comprise a first filter for filtering the measured vibrations of the static portion.

In any example of the disclosure, the processor may comprise a second filter for filtering the measured vibrations of the nut assembly.

In any example of the disclosure, the first and/or second filter may be a high-pass, a low-pass, bandwidth or band stop filter.

In any example of the disclosure, the processor may comprise an amplifier for applying a gain to the measured vibrations of the static portion.

In any example of the disclosure, the system may comprise a first housing configured to protect the first strain gauge.

In any example of the disclosure, the system may comprise a second housing configured to protect the second strain gauge.

In any example of the disclosure, the first housing may be configured to protect the processor.

In any example of the disclosure, the system may be configured to notify a user when primary load path failure has occurred.

In any example of the disclosure, the system may be configured to activate an alarm when primary load path failure has occurred.

In any example of the disclosure, the second strain gauge may be mounted on a support member configured to be mounted to the nut assembly. In any example of the disclosure, the support member may be a plate.

In any example of the disclosure, the first strain gauge may be one of a piezoelectric strain gauge, a piezoresistive strain gauge, a capacitive strain gauge or a metal foil strain gauge.

In any example of the disclosure, the second strain gauge may be one of a piezoelectric strain gauge, a piezoresistive strain gauge, a capacitive strain gauge or a metal foil strain gauge.

In any example of the disclosure, the first strain gauge and the processor may be connected with a wired connection. In any example of the disclosure, the first strain gauge and the processor may be connected wirelessly.

In any example of the disclosure, the second strain gauge and the processor may be connected with a wired connection. In any example of the disclosure, the second strain gauge and the processor may be connected wirelessly. In any example of the disclosure, the wired connection connecting the second strain gauge and the processor may be arranged to pass through the horizontal stabilizer.

In any example of the disclosure, the system may comprise a first part comprising the first strain gauge and a second part comprising the second strain gauge. In any example of the disclosure, the first part may be mounted to the static portion and the second part may be mounted to the nut assembly.

According to another aspect of the disclosure, there is provided an actuator. The actuator comprises a screw shaft, a static portion fixedly attached to the screw shaft, and a nut assembly moveable along the screw shaft. The nut assembly is moveable relative to the static portion. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The actuator comprises the system of any of the above examples, wherein the first strain gauge is mounted to the static portion and the second strain gauge is mounted to the nut assembly.

In any example of the disclosure, the nut assembly may comprise a junction plate configured to form a portion of the primary load path in normal operation, and further configured to form a portion of the secondary load path upon failure of the primary load path, and wherein the second strain gauge is mounted on the junction plate.

In any example of the disclosure, the secondary nut may comprise a pair of trunnions.

In any example of the disclosure, the nut assembly may comprise a pair of junction plates.

In any example of the disclosure, each of the junction plates may comprise an opening for receiving a respective trunnion of the pair of trunnions.

In any example of the disclosure, in normal operation, the trunnions may not contact respective openings in the junction plate.

In any example of the disclosure, the first strain gauge may be attached anywhere on the static portion.

In any example of the disclosure, the actuator may be a linear actuator.

In any example of the disclosure, the actuator may be an electromechanical linear actuator.

In any example of the disclosure, the actuator may be a trimmable horizontal stabiliser actuator.

According to another aspect of the disclosure, there is provided an aircraft comprising the system of any of the above examples or the actuator of any of the above examples.

According to another aspect of the disclosure, there is provided a method for identifying a failure of the primary load path in an actuator. The actuator comprises a screw shaft, a static portion fixedly attached to the screw shaft, and a nut assembly moveable along the screw shaft. The nut assembly is moveable relative to the static portion. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The method comprises measuring vibrations of the static portion by a first strain gauge mounted to the static portion, measuring vibrations of the nut assembly by a second strain gauge mounted to the nut assembly, and comparing the measured vibrations of the static portion and the measured vibrations of the nut assembly to identify a failure of the primary load path.

In any example of the disclosure, the method may comprise filtering the measured vibrations of the static portion.

In any example of the disclosure, the method may comprise filtering the measured vibrations of the nut assembly before comparing the measured vibrations.

In any example of the disclosure, the method may comprise comparing the measured vibrations of the static portion and the measured vibrations of the nut assembly using a first comparator.

In any example of the disclosure, the method may comprise comparing the output from the first comparator with a reference signal using a second comparator to identify failure of the primary load path.

In any example of the disclosure, the method may comprise amplifying the measured vibrations of the static portion before comparing the measured signals.

According to another aspect of the disclosure, there is provided a method for modifying an actuator. The actuator comprises a screw shaft, a static portion fixedly attached to the screw shaft, and a nut assembly moveable along the screw shaft. The nut assembly is moveable relative to the static portion. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The method comprises installing the system of any of the above examples on the actuator. The step of installing the system of any of the above examples comprises mounting the first strain gauge to the static portion and mounting the second strain gauge to the nut assembly.

### BRIEF DESCRIPTION OF THE DRAWINGS

Various examples will now be described, by way of example only, and with reference to the accompanying drawings in which:
Fig. 1 shows a schematic perspective view of the tail end of an aircraft;
Fig. 2 shows a schematic view of an example actuator for use with a system according to an example of the disclosure;
Fig. 3 shows one example of a primary and secondary load path of the actuator of Fig 2;
Figs. 4a and 4b show examples of the primary and secondary load paths in an example actuator for use with a system according to the disclosure, in which the primary load path is shown in Fig 4a, while the secondary load path is shown in Fig 4b;
Figs. 5a and 5b schematically show secondary load path loading at the static portion of the actuator before and after primary load path failure respectively;
Fig. 6 shows a schematic perspective view of a nut assembly of the actuator of Figs. 4a and 4b and including a portion of the screw shaft for reference;
Fig. 7 shows a schematic cross-sectional view of the nut assembly of Fig. 6 and including a portion of the screw shaft for reference;
Figs. 8a and 8b show a schematic perspective view of the static portion of the actuator shown in Figs 4a and 4b with a strain gauge attached thereto in first and second alternative positions respectively;
Figs. 9a, 9b and 9c show schematic perspective views of the nut assembly of Fig. 6 with respective strain gauges attached thereto;
Fig. 10 shows a schematic side view of a system according to an example of the disclosure;
Figs. 11a and 11b show example strain gauge signal data; and
Fig. 12 shows an example processor for comparing strain gauge signal data.

### DETAILED DESCRIPTION

The present disclosure relates to actuators, such as for example, a flight control actuator, such as a trimmable horizontal stabiliser actuator ("THSA") for an aircraft. In any example of the disclosure, the actuator includes a primary load path and a secondary load path that is configured to carry the load of the actuator upon failure of the primary load path. In any example of the disclosure, the actuator includes first and second strain gauges and is configured to identify failure of the primary load path based on vibrations recorded by the first and second strain gauges.

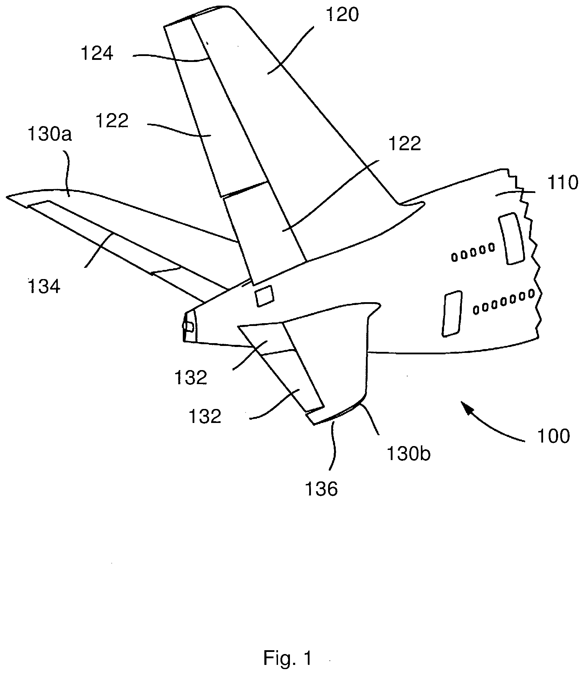

Fig. 1 shows a schematic perspective view of the tail end 100 of an aircraft (not shown). The aircraft includes a vertical stabiliser 120 extending upwardly from the aircraft fuselage 110 and respective horizontal stabilisers 130a, 130b extending outwardly from the aircraft fuselage 110 on respective sides of the aircraft. One or more rudders 122 are provided at the trailing edge 124 (i.e. the rear face) of the vertical stabiliser 120 and one or more elevators 132 are provided on the trailing edge 134 (i.e. the rear face) of each horizontal stabiliser 130a, 130b. The vertical stabilisers 120, horizontal stabilisers 130a, 130b, rudders 122 and elevators 132 are adapted to be moved by actuation systems (not shown) to control movement of the aircraft.

The actuation system typically includes a control system (not shown) and a number of actuators (not shown in Fig. 1) configured to move the respective vertical stabilisers 120, horizontal stabilisers 130a, 130b, rudders 122 and elevators 132 under the control of the control system.

The actuators may take a number of different forms depending for example on the type and size of aircraft in which they are used. In one example, one or more electromechanical actuators, more specifically electromechanical linear actuators may be provided in the actuation system. An example of an electromechanical linear actuator which may be used to move one of the horizontal stabilisers 130a, 130b is a "trimmable horizontal stabiliser actuator" (often referred to as a THSA). The electromechanical linear actuator according to various examples of the disclosure may for example be a THSA for use with horizontal stabilisers as described above. It will be understood however that the present disclosure is relevant to other types of electromechanical linear actuators and is not limited to actuators for use in aircraft or to THSAs.

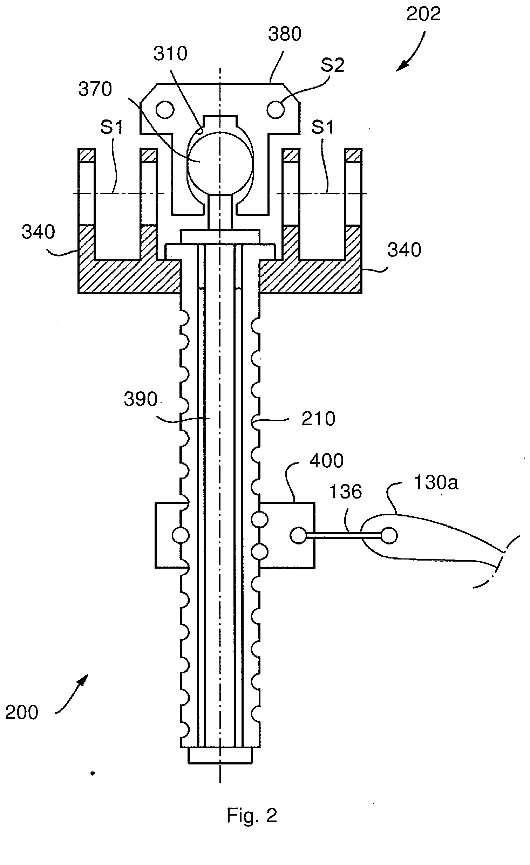

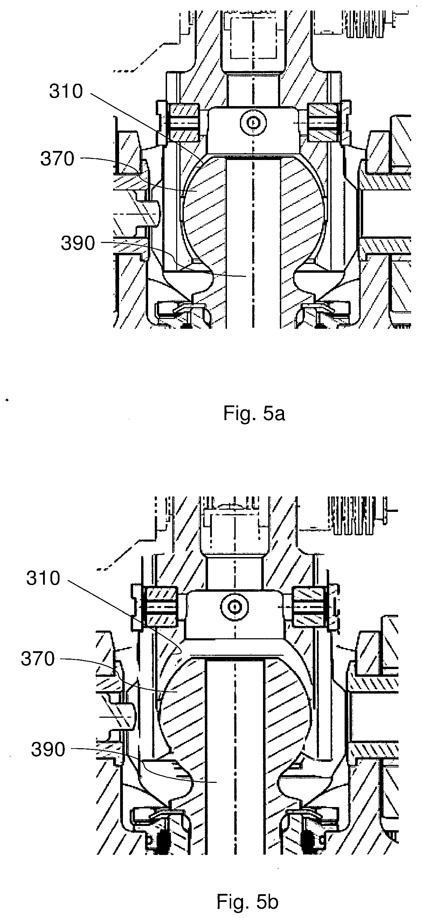

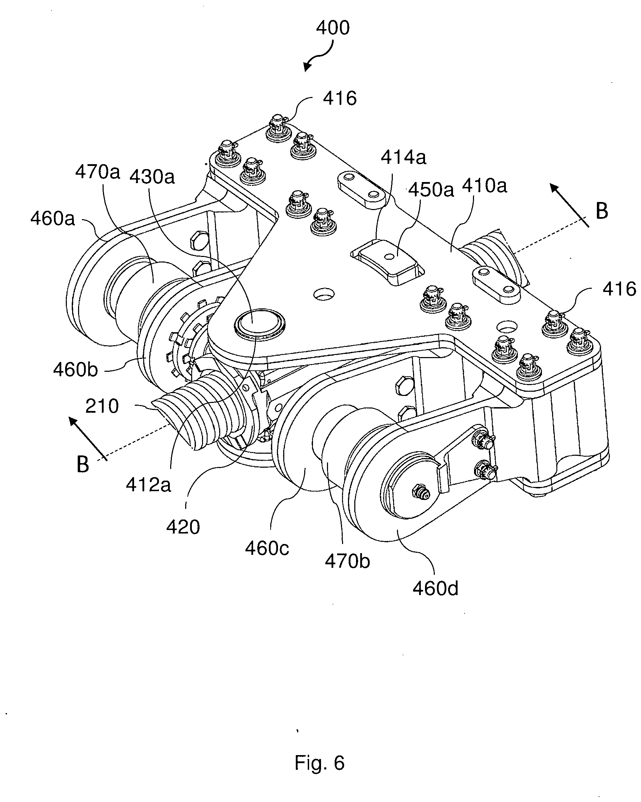

Fig. 2 shows an example actuator 200, which may be a flight control actuator, such as a trimmable horizontal stabiliser actuator ("THSA"), as described above. The actuator 200 may include a primary load path with a screw shaft 210 (e.g., that is hollow) connected at an end thereof, for example at its upper end as shown, to the aircraft via a static portion 202 including a first joint system 340 (e.g., a Carden joint system) joining with first aircraft structural elements S1. The primary load path further includes a nut assembly 400 mounted on the screw shaft 210, and the nut assembly 400 is connected to a moveable component, for example, a stabiliser 130a, 130b of the aircraft, this connection being achieved for example by a second joint system 136 (e.g., a further Carden joint system). Nut assembly 400 is described in more detail below with respect to Figs. 5 and 6.

The secondary load path may be provided by means of a tie bar 390 that is within the screw shaft 210. The tie bar 390 is terminated at a first end by a male portion, in this case optionally taking the form of a spherical head 370, which is mounted within a female portion on a fastening piece 380, optionally taking the form of a recess 310. The fastening piece 380 may be connected to the structure of the aircraft via second aircraft structural elements S2. The actuator may also include some means for preventing motion of the nut assembly 400 relative to the screw shaft 210 and/or for fixing the stabiliser 130a/second joint system 136 in place when the primary load path fails. Thus, the nut assembly 400, also includes secondary load path elements that are enabled for use upon failure of the primary load path.

It will be appreciated from Fig. 2 that movement of the spherical head 370 may be restricted by the upper and lower shoulders of the recess 310. Consequently, the stabiliser 130a can either be safely held in a single position (in the case where the nut assembly 400 locks in place) or in some arrangements it might be permitted to continue normal movement should the tie bar 390 be connected with the screw shaft 210 in such a way as to permit continued rotation of the screw shaft 210 even after failure preventing it from carrying axial loads.

During normal use, e.g., without any failure, the loading for the actuator 200 is carried via the primary load path. In the event of a failure of the primary load path the loading is transferred to the secondary load path.

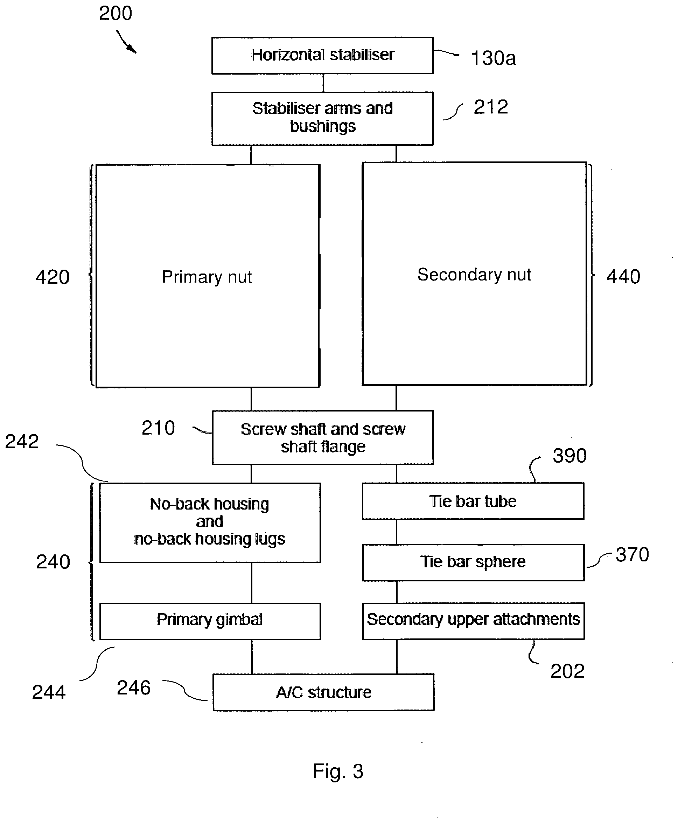

Fig. 3 shows one possible arrangement for the primary and secondary load paths of the actuator 200, in which a component (e.g., a horizontal stabiliser) 130a, 130b is connected by optional arms and bushings 212 to a primary nut 420 which connects it to the screw shaft 210.

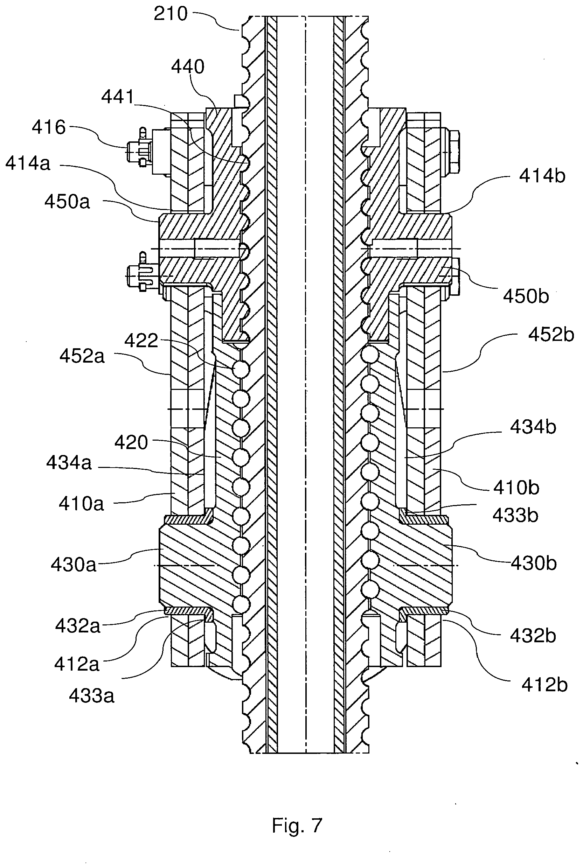

As described in more detail below, the primary nut 420 may include primary trunnions 430a, 430b operatively connected to respective junction plates 410a, 410b (Fig. 7), and the primary nut 420 may comprise a ballscrew assembly (not shown).

The primary nut 420 forms part of the lower attachment 400 of the actuator 200 that is dedicated to the primary load path. At the upper end of the actuator 200 a joint system 240 (such as a Cardan joint system) will typically include no back elements 242 along with the primary load path gimbal 244, which may be coupled to the aircraft structure 246. During normal use, e.g., without any failure, the loading for the actuator 200 is carried via the primary load path.

In the event of a failure of the primary load path the loading is transferred to the secondary load path. In this case at the lower attachment 400 the horizontal stabiliser 130a is connected by the (optional) stabiliser arms and bushings 212 to a secondary nut 440.

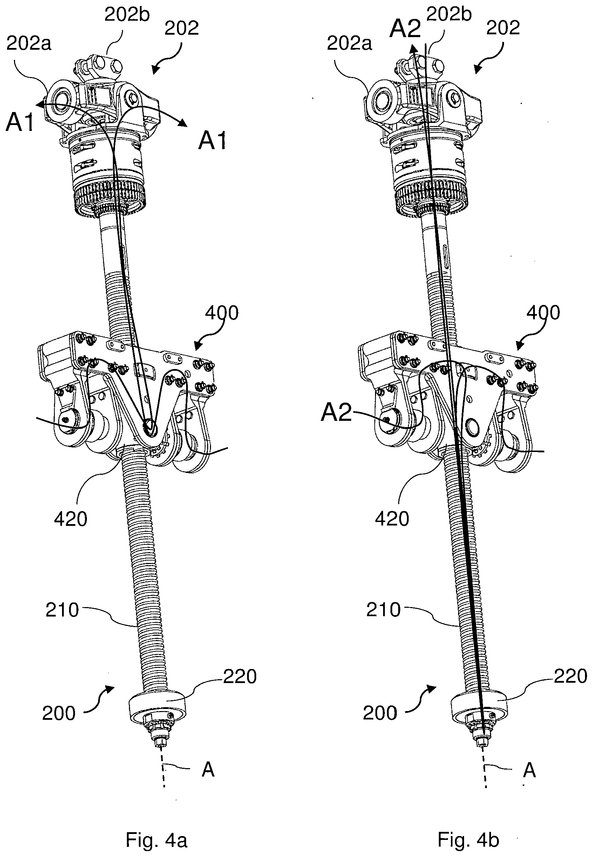

The secondary nut 440 typically comprises a screw thread that is arranged to lock with the threads of the screw shaft 210, preventing movement of the horizontal stabiliser 130a when the secondary load path is engaged. As described in more detail below (see Fig. 4), the secondary nut 440 may comprise secondary trunnions 450a, 450b which may be operatively connected to junction plates 410a, 41 0b. The secondary nut 440 may comprise screw threads (not shown) which can be joined to the thread of the screw shaft 210 when the secondary load path is engaged.

From the secondary nut 440 the load in the secondary load path may be transmitted via the screw shaft 210 along the tie bar rod 390 (Fig. 2) and optionally through the male end of the tie bar rod 390, which in this example is a tie bar sphere 370, and to an upper secondary attachment 202. Thus, the secondary nut 440 forms part of the lower attachment 400 of the actuator 200 that is dedicated to the secondary load path.

Examples of the primary and secondary load paths in an actuator according to the disclosure are shown in Figs. 4a and 4b. The primary load path is shown in Fig. 4a, which illustrates the actuator 200 operating under normal operation. While the secondary load path is shown in Fig. 4b, which illustrates the actuator 200 operating after failure of the primary load path.

Fig. 4a shows the actuator 200 comprising a static portion 202 that is configured to attach to a stationary object, for example an aircraft fuselage (not shown in Figs. 4a and 4b) as described above. The actuator 200 further comprises a motor (not shown) or other driving means configured to rotate the screw shaft 210 about an axis A.

The actuator 200 further comprises a nut assembly 400 as previously described that is configured to move axially along the screw shaft 210 upon rotation thereof. A component, for example a horizontal stabiliser 130a, may be operatively connected to the nut assembly 400, such that movement of the nut assembly 400 along the axis A causes actuation of the component by the actuator 200. A stop 220 located at one end of the screw shaft 210 is also shown in Figs. 4a and 4b. The stop 220 prevents the nut assembly 400 from detaching from the screw shaft 210.

The static component 202 may comprise a primary portion 202a and a secondary portion 202b, which may be connected to different parts of the stationary object or may be connected via different connections. The static component 202 may also be referred to as the upper attachment 202.

The nut assembly 400 comprises a primary nut 420 and a secondary nut 440, both of which may cooperate with the screw shaft 210 in order to drive the nut assembly 400 upon rotation thereof. This is described in more detail below.

During normal operation, as shown in Fig 4a, load is transferred from the component to which the actuator 200 is attached to the primary nut 420, and then to the primary portion 202a of the static component 202 via the screw shaft 210. This is referred to herein as a primary load path and is indicated by the arrows A1.

Upon failure of one or more components of the primary load path (e.g., rupturing of the primary nut 420 or one or more parts thereof) a secondary load path (indicated by the arrows A2 in Fig. 4b) is provided that is configured to transmit load between the static component 202 and the component to which the actuator 200 is attached.

Figs. 5a and 5b show a schematic cross-sectional view through a part of the static component 202 to illustrate a change in secondary load path loading. Fig 5a shows the positioning of the spherical head 370 within the recess 310 during normal operation when the primary load path is functional or, in other words has not failed. In this position, the spherical head 370 does not contact the upper and lower shoulders of the recess 310 when the load is not applied on the tie bar 390. That is, when the secondary load path is not loaded. Fig 5b shows the positioning of the spherical head 370 within the recess 310 after primary load path failure. In particular, it can be seen that spherical head 370 abuts the lower shoulders of the recess 310 such that load is transferred to the secondary load path in this position.

Fig. 6 is a perspective view which shows the nut assembly 400 in more detail, and includes a portion of the screw shaft 210 for reference. Fig. 7 shows a cross-sectional side view of the nut assembly 400 of Fig. 6 taken along line B-B when the secondary load path is engaged as described further below.

As mentioned above, the nut assembly 400 comprises a primary nut 420. In the example shown, the primary nut 420 is mounted coaxially on the screw shaft 210. In some examples, the primary nut 420 is part of a suitable ballscrew assembly (or similar means) and cooperates with the screw shaft 210. In some examples, the ballscrew assembly comprises balls or ball bearings 422 arranged between the screw shaft 210 and the primary nut 420 so as to couple the screw shaft 210 and the primary nut 420 in the ballscrew assembly. In some examples, the primary nut 420 comprises a pair of primary trunnions 430a, 430b. In some examples, the primary nut 420 and primary trunnions 430a, 430b are shown as integrally formed. In other examples, the primary nut 420 and primary trunnions 430a, 430b may be formed separately and secured together. In any example, the primary trunnions 430a, 430b can extend outwardly from the primary nut 420 in opposite directions to each other and / or from opposite sides of the primary nut 420. In any example of the disclosure, the primary trunnions 430a, 430b can be coaxial with each other. In some examples, the primary trunnions 430a, 430b are shown as circular in cross-section. In other examples, the primary trunnions 430a, 430b may have any suitable cross-section, for example, square, rectangular or oval.

The nut assembly 400 comprises a secondary nut 440. In the example shown, the secondary nut 440 is mounted coaxially with the screw shaft 210. In some examples, the secondary nut 440 comprises a screw thread 441 for cooperating with the screw shaft 210. In the example shown, the secondary nut 440 comprises a pair of secondary trunnions 450a, 450b. In some examples, the secondary trunnions 450a, 450b are shown as circular in cross-section. In other examples, the secondary trunnions 450a, 450b may have any suitable cross-section, for example, square, rectangular or oval. The secondary nut 440 does not transmit load under normal operation (i.e. when the primary load path is loaded).

In the example shown, the nut assembly 400 comprises a pair of junction plates 410a, 410b. The junction plates 410a, 410b may be provided on opposite sides of the secondary nut 440. The junction plates 410a, 410b may extend parallel or within about 5° of parallel to each other. The junction plates 410a, 410b may extend parallel or within about 5° of parallel to the axis A. In some examples, the junction plates 410a, 410b are identical. In the example shown, apertures in the junction plates 410a, 410b define openings 412a, 412b for receiving one of the primary trunnions 430a, 430b, respectively. The nut assembly 400 may comprise bushings 432a, 432b which may be located on the respective primary trunnions 430a, 430b. The bushings 432a, 432b may be configured such that the primary trunnions 430a, 430b are snug within the openings 412a, 412b. As shown in Fig. 6, one or more of the bushings 432a, 432b may comprise a flange 433a, 433b which abuts against a respective inner surface 434a, 434b of the junction plates 410a, 410b, so as to be retained in place.

In the example shown, apertures in the junction plates 410a, 410b may define openings 414a, 414b for receiving the respective secondary trunnions 450a, 450b. In the example shown, the openings 414a, 414b are shaped and sized such that, in normal operation, the secondary trunnions 450a, 450b are not in contact with the respective junction plates 410a, 410b. This is described in more detail below.

In the present example, the primary trunnions 430a, 430b and secondary trunnions 450a, 450b are configured to protrude outwardly, in some examples radially outwardly, so as to extend beyond the respective outer surfaces 452a, 452b of the junction plates 41 0a, 410b. In other examples, the primary trunnions 430a, 430b and/or the secondary trunnions 450a, 450b may extend up to the outer surfaces 452a, 452b of the junction plates 410a, 410b.

In the example shown, the nut assembly 400 comprises arm portions 460a, 460b, 460c, 460d that run axially along sides of the nut assembly 400 between the junction plates 410a, 410b. In the present example, the arm portions 460a, 460b, 460c, 460d are arranged as pairs. In this example, a first pair of arm portions 460a, 460b are arranged on an opposite side of the screw shaft 210 to a second pair of arm portions 460c, 460d. Each pair of arm portions is configured to support respective connectors 470a, 470b. Connectors 470a, 470b are configured to attach or operatively connect to a moveable component, such that axial movement of the primary nut 420 causes actuation of the moveable component. The arrangement comprising the junction plates 410a, 410b, the arm portions 460a, 460b, 460c, 460d, and the connectors 470a, 470b may be referred to as the connection assembly.

In the example shown, the primary nut 420, the secondary nut 440 and junction plates 410a, 410b are configured such that load is not transmitted to the secondary nut 440 during normal operation. In the example shown, this is achieved by providing a clearance around the secondary trunnions 450a, 450b such that the secondary trunnions 450a, 450b do not contact the inner edges defined by the openings 414a, 414b.

In the following, failure of the primary load path and subsequent loading of the secondary load path in one example of the disclosure is described. In the example shown, clearance provided between the secondary trunnions 450a, 450b and respective junction plates 410a, 410b allow the junction plates 410a, 410b, arm portions 460a, 460b, 460c, 460d and connectors 470a, 470b to move axially relative to the secondary nut 440 upon failure of the primary load path. The connection assembly will therefore continue to move axially relative to the secondary nut 440 until the inner surfaces of the openings 412a, 412b of junction plates 410a, 410b contact respective secondary trunnions 450a, 450b. The secondary trunnions 450a, 450b provide a resistive force against the connection assembly, thereby preventing further relative movement between the secondary nut 440 and the connection assembly. Consequently, the load is transmitted through the secondary nut 440 once the inner surfaces of the openings 412a, 412b of junction plates 410a, 410b contact respective secondary trunnions 450a, 450b. Put another way, upon failure of the primary load path, the junction plates 410a, 410b and the secondary trunnions 450a, 450b move into engagement with each other so as to form part of the secondary load path.

The inventors have realised that primary load path failure can be identified by a system including a pair of strain gauges located at different locations on the actuator. By comparing the measured vibrations from the pair of strain gauges, it is possible to identify failure of the primary load path.

In the following described examples, a system for identifying a failure of the primary load path in an actuator 200 is provided in which first 480a and second 480b strain gauges are used to measure vibrations of the parts of the actuator to which they are mounted. This is explained in more detail below.

It is to be understood that, in any example of the disclosure, the system may be used with a linear actuator, an electromechanical linear actuator or a trimmable horizontal stabiliser actuator.

In some examples, the first and second strain gauges are metal foil strain gauges. In some examples, the first and second strain gauges are piezoelectric strain gauges. In other examples, the first and second strain gauges can be piezoresistive strain gauges, capacitive strain gauges or any other strain gauges configured to measure vibrations. Hereinafter, reference to strain gauges includes any strain gauge suitable for measuring vibrations of the actuator.

In any of the examples wherein the first and/or second strain gauge is a piezoelectric strain gauge, the piezoelectric strain gauge may be a piezoelectric omnidirectional strain sensor. One such piezoelectric omnidirectional strain sensor which may be used is a Dragonfly^{®} DGF-OMN-AA20206-10 Piezoelectric omnidirectional strain sensor manufactured by Wormsensing. The strain gauge may behave as a charge generator in parallel with a capacitor and a leakage resistor. The strain gauge may be passive and may not require any power supply. In some examples, the strain gauge can be operated either in charge mode (using a charge amplifier) or voltage mode (direct measurement). The strain gauge of some examples is made from a thin piezoelectric ceramic. A sensing element of the strain gauge typically has a thickness of less than 10 µm. The thickness may be between 1 µm and 20 µm, or between 5 µm and 15 µm. These thicknesses enable the sensing element to have the flexibility and stretchability of a 2D material. The crystalline nature of the sensing element of some examples results in high durability and repeatability.

For typical metal foil strain gauges, sensitivities are limited to about 1 to 10 µdef, where µdef is the unit of microstrain. Strain (ε) is the ratio of change in length to the original length, therefore, microstrain is ε x 10⁻⁶. By comparison, a strain gauge of the type described above may enable measurements in the region of about 0.01 µdef, having a sensitivity at least one hundred times greater than a typical metal foil strain gauge.

The first strain gauge is configured to be mounted to the static portion and measure vibrations thereof. The second strain gauge is configured to be mounted to the nut assembly and measure vibrations thereof. A first housing may be provided which is configured to protect the first strain gauge. The first strain gauge may be mounted within the first housing. In addition or alternatively, a first plate may be provided, on which the first strain gauge may be mounted. The first plate may be mounted to the static portion and / or the first plate may be part of the first housing. A second housing may be provided which is configured to protect the second strain gauge. The second strain gauge may be mounted within the second housing. In addition or alternatively, a second plate may be provided, on which the second strain gauge may be mounted. The second plate may be mounted to the static portion and / or the second plate may be part of the second housing.

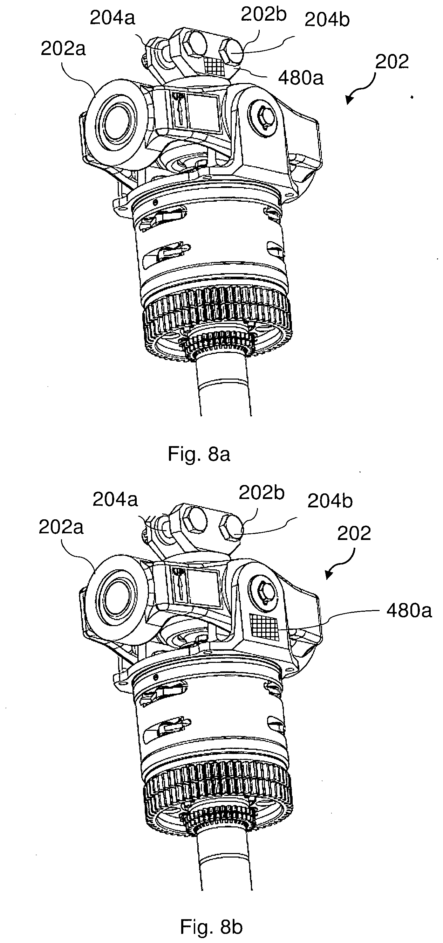

Fig. 8a shows a schematic perspective view of the static portion 202 with a first strain gauge 480a mounted thereto. As can be seen from Fig. 8a, the first strain gauge may be mounted to a portion of the secondary load path, in particular, to the secondary portion 202b as in the example shown. The first strain gauge 480a may be mounted in various ways, which are explained below.

Fig. 8b shows a schematic perspective view of an alternative example of the static portion 202 with a first strain gauge 480a mounted thereto. In this and other examples, the first strain gauge 480a may be mounted to a portion of the primary load path, in particular, to the primary portion 202a.

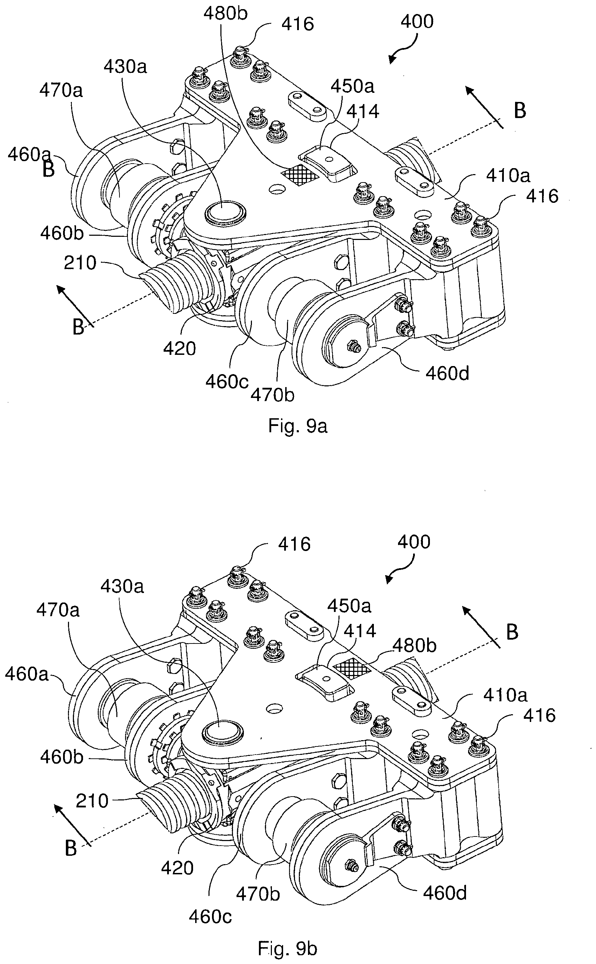

Figs. 9a-c each show the nut assembly 400 shown in Fig. 5 with a second strain gauge 480b attached thereto in a different respective position.

In the following examples, the first and second strain gauge 480a, 480b may be retrofitted to an existing actuator 200 as shown. That is, the actuator 200 requires no disassembly or only minor disassembly in order to attach the first and second strain gauges 480a, 480b to the static portion 202b and nut assembly 400, respectively.

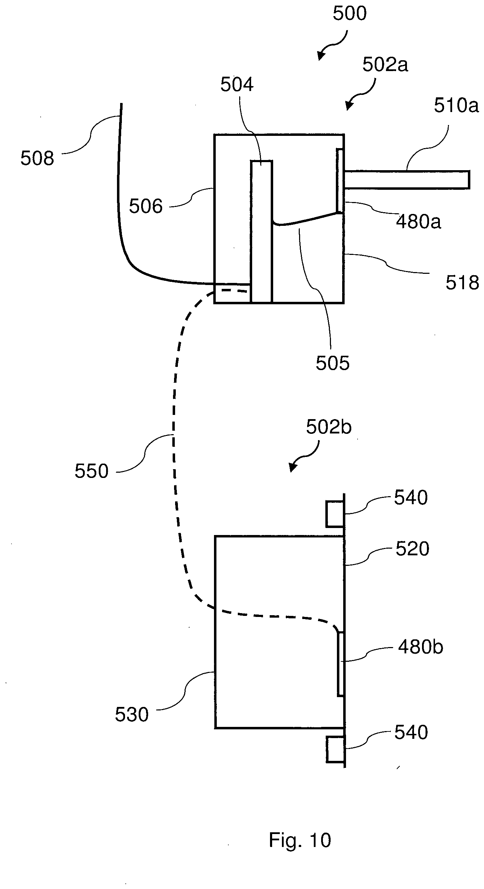

Fig. 10 shows a schematic side view of a system 500 for identifying a failure of the primary load path in an actuator, system 500 including first and second strain gauges 480a, 480b, such as those described above, and a processor for processing signals from the first and second strain gauges 480a, 480b. The processor may comprise electronics 504 or other processing means. In any example of the disclosure, the processor may be configured to compare a signal from the first strain gauge 480a with a signal from the second strain gauge 480b, in other words to compare the measured vibrations of the static portion to the measured vibrations of the nut assembly so as to identify a failure of the primary load path in the actuator.

The system 500 comprises a first part 502a and a second part 502b. The first part 502a includes the first strain gauge 480a and the second part 502b includes the second strain gauge 480b. The first part 502a can be mounted to the static portion 202 so as to mount the first strain gauge 480a to the actuator, for example in any of the positions described above. The second part 502b can be mounted to the nut assembly 400 so as to mount the second strain gauge 480b to the actuator, for example in any of the positions described above.

As seen in Fig. 10, the first strain gauge 480a can be mounted on a plate 518 which in turn can be mounted to a part of the actuator, for example, the static portion. A first housing 506 may be provided, for example, mounted on the plate 518 or integral therewith. In the present example, the processor 504 is shown mounted within the first housing 506. The housing 506 may be configured to protect, for example, enclose, the first strain gauge 480a and the electronics 504. The plate 518 and first housing 506 may be made of the same or different materials, including but not limited to metals. A wired connection 505 or a wireless connection may be provided between the first strain gauge 480a and the processor 504. In some examples, the processor may be provided externally of the housing, for example, in the aircraft. Further, the processor for processing signals received from the first strain gauge 480b may also be provided in the system 500 and within the housing 506. As described below, the housing 506 can be mounted to a part of the actuator, in particular, the static portion 202, more particularly, the secondary portion 202b, by fixing means such as one or more bolts 510a.

The second strain gauge 480b can be mounted on a plate 520 which in turn can be mounted to a part of the actuator 200, for example, the junction plate 410a. As described below, the plate 520 can be mounted to a part of the actuator 200 by a plurality of fixings 540 such as screws or rivets. A second housing 530 may be provided, for example, mounted on the plate 520 or integral therewith. The second housing 530 may be configured to protect, for example, enclose the second strain gauge 480b. The plate 520 and second housing 530 may be made of the same or different materials, including but not limited to metals. A wired connection 550 or wireless connection may be provided between the second strain gauge 480b and the processor 504. Further, the processor for processing signals received from the second strain gauge 480b and /or the first strain gauge 480a may also be provided in the system 500 and within the housing 530 if desired.

During use, the nut assembly translates along the screw shaft, therefore, the distance between the second strain gauge 480b, located on the nut assembly, and the processor 504 will vary during use. As such, the wired connection between the second strain gauge 480b and the processor 504 will be subjected to movement. Accordingly, the wired connection 550 may be arranged to pass through the horizontal stabilizer and to the second strain gauge 480b.

In the example shown in Fig. 9a, the second strain gauge 480b , or in some examples the second part 502b of the system 500 including the second strain gauge 480b, is attached to an outer surface of a junction plate 410a. In the example shown, the second strain gauge 480b may be located to be aligned with the secondary trunnion 450a in the axial direction. In other examples, the second strain gauge 480b may be offset such that it is not aligned with the secondary trunnion 450a. The second strain gauge 480b may be positioned so as to be located axially between the secondary trunnion 450a and the primary trunnion 430a. In this example, the second strain gauge 480b is located axially closer to the secondary trunnion 450a than to the primary trunnion 430a. In other examples, the second strain gauge 480b may be located equidistant between the primary trunnion 430a and secondary trunnion 450a. In other examples, the second strain gauge 480b may be located closer to the primary trunnion 430a than to the secondary trunnion 450a.

In the alternative example shown in Fig. 9b, the second strain gauge 480b is attached to an outer surface of junction plate 410a. In this example, the second strain gauge 480b, or in some examples the system 500 including the second strain gauge 480b, is located to be aligned with the secondary trunnion 450a in the axial direction. In other examples, the second strain gauge 480b may be offset such that it is not aligned with the secondary trunnion 450a. In this example, the second strain gauge 480b is positioned such that the secondary trunnion 450a is located axially between the second strain gauge 480b and the primary trunnion 430a.

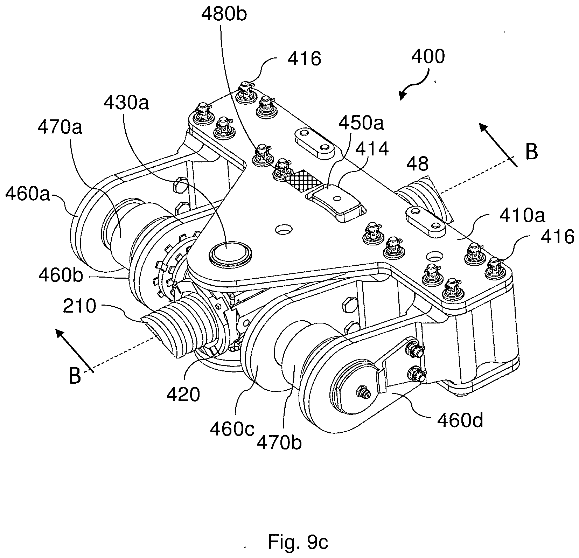

In the example shown in Fig. 9c, the second strain gauge 480b, or in some examples the second part 502b of the system 500 including the second strain gauge 480b, is attached to an outer surface of junction plate 410a. In particular, the second strain gauge 480b is located to be axially offset from the secondary trunnion 450a. In other examples, the second strain gauge 480b may be offset such that it is not aligned with the secondary trunnion 450a. In this example, the second strain gauge 480b is positioned such that the secondary trunnion 450a is located axially between the second strain gauge 480b and the primary trunnion 430a. It is to be understood that in any example, the second strain gauge 480b may be located anywhere on the junction plate 410a. In some examples, the second strain gauge 480b may be attached to junction plate 410b.

In other examples, rather than being attached by fixing means such as screws ,or rivets, for example via the plate and housing described above, the second strain gauge 480a may be attached to a part of the actuator 200, for example the junction plate 410a, 410b with an adhesive.

In any example, the first and second strain gauges 480a, 480b (or in other examples, the system 500) may be retrofitted to an existing actuator 200 as shown. That is, the actuator 200 requires no disassembly or only minor disassembly in order to attach the first and second strain gauges 480a, 480b or the first and second parts 502a, 502b of the system 500 to the static portion 202b and nut assembly 400, respectively.

In any example of the disclosure, the system may be retrofitted to the actuator using pre-existing means. That is, existing parts of the actuator may be used to secure the system to the actuator.

In the present example, the first housing 506 and / or the first plate 518 may be retrofitted to the actuator 200 using the fixing mean(s) 510a. In this case, bolts 204a, 204b shown in Figs. 8a and 8b used to connect the actuator to the aircraft structure may be removed. The system may be retrofitted by replacing the bolts 204a, 204b with the fixing means 510a of the system 500.

In the present example, the second housing may be retrofitted to the actuator using one or more fasteners which are used to secure the junction plates and arm portions together. As discussed above, the housing may comprise one or more holes. In the present example, the one or more fasteners may be temporarily removed so that the second housing may be placed in position so that the one or more holes align with the one or more holes from which the fasteners have been removed. The one or more fasteners may then be replaced, so as to pass through the one or more holes in the second housing, and fastened so as to secure the second housing to the actuator. In some examples, the first and/or second housing may be further secured with an adhesive, or with adhesive alone.

In some examples, the first and second strain gauges may be mounted directly to the static portion 202b and nut assembly 400, respectively. In some examples, the first and second housings 506, 530 may be installed subsequently so as to protect the respective first and second strain gauges 480a, 480b. Additionally, or alternatively, the first and/or second housings 506, 530 may be attached to the actuator with an adhesive. In some examples, the first and second housings 506, 530 may be formed from the same material.

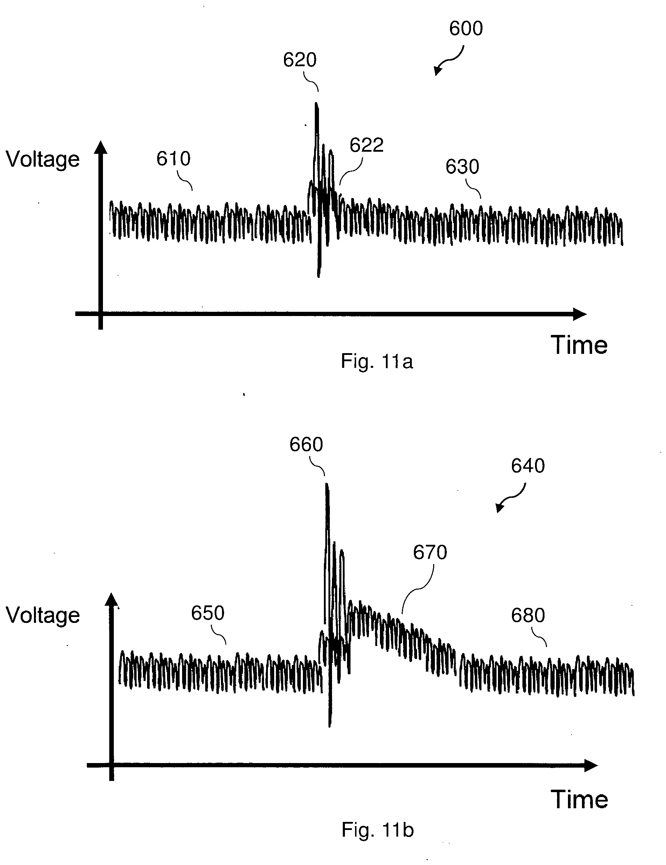

Figs. 11a and 11b show example signals 600, 640 taken from a first strain gauge 480a and a second strain gauge 480b, respectively in a system according to an example of the disclosure. In this example, the first strain gauge 480a may be mounted to secondary portion 202b, as shown in Fig. 8a, and the second strain gauge 480b may be mounted to the nut assembly between the primary and second trunnions 430a and 450a, as shown in Fig. 9a.

In normal operation of the actuator 200, the first strain gauge 480a is located along the secondary load path and is submitted to background vibrations during normal use, which the first strain gauge 480a can measure. Upon failure of the primary load path, the first strain gauge 480b will further measure the vibrations resulting from the loading of the secondary load path.

In normal operation of the actuator 200, the second strain gauge 480b is located along the primary load path and is submitted to background vibrations during use, which the second strain gauge 480b can measure. Upon failure of the primary load path, and in cases where load is transferred through the secondary trunnion 450a, the second gauge 480b will measure the vibrations resulting from such loading. The junction plates 410a, 410b may experience further deformation during failure due to contact between the secondary trunnions 450a, 450b and the junction plates 410a, 410b. The vibrations resulting from this deformation may also be measured by the second strain gauge 480b.

Figs. 11a and 11b show example signals 600, 640 recorded by the first strain gauge 480a and the second strain gauge 480b, respectively. In both Figs. 11a and 11b, voltage is shown on the y-axis and is measured against time, shown on the x-axis. Both the first and second strain gauges 480a, 480b may measure background vibrations 610, 650 experienced by the actuator 200. It is to be understood that background vibrations are those vibrations which the actuator 200 may experience under normal use. It is to be understood that in any example, signal or signal data may referred to as measured vibrations.

Since these background vibrations 610, 650 may always be present during normal use, the background vibrations are measurable by the first and second strain gauges 480a, 480b, respectively. In the present example shown in Figs. 11a and 11b, the background vibrations 610, 650 have a regular and repetitive signature. It is to be understood that the background vibrations may be more or less regular and repetitive than shown. For example, the measured voltage may be more or less than that shown dependent on where exactly the first and second strain gauges 480a, 480b are located on the static portion and the junction plate.

In the example shown in Figs. 8a and 8b, the first strain gauge 480a is configured such that, when in one of the positions shown, it is capable of measuring or detecting a shock generated by the loading of the secondary load path.

In the example shown in Figs. 9a and 9b, the second strain gauge 480b is configured such that, when in one of the positions shown, it is capable of measuring or detecting both the loading of the junction plates 410a, 410b by the respective secondary trunnions 450a, 450b and the shock generated therefrom, which has been referred to above as the loading of the secondary load path. It is to be understood that the loading and the shock generated exhibit different signatures in the measured signal.

During normal operation, the actuator may experience shocks during load inversions. By load inversion, it is meant that the direction of load through the actuator is reversed. These shocks are typically due to internal backlashes in the actuator. Example shocks recorded by the first and second strain gauges 480a, 480b are shown by signals 620 and 660 in Figs 11a and 11b, respectively. In each of Figs 11a and 11b, the shock is shown as an increase in voltage amplitude 620, 660 compared to average voltage caused by respective background vibrations 610, 650. As the shock is transmitted through the actuator 200, the shock is damped. This damping of the shock is visible in the signal data as an overall decrease in the voltage amplitude 622 after the initial shock increase 620. The actuator will still experience background vibrations 630 after the secondary load path is loaded and these will still be recorded by the first strain gauge 480a, as shown in Fig. 11a.

The loading of the secondary load path may be measured when the second strain gauge 480b is positioned as shown in Figs. 9a to 9c. Such loading may appear in the signal as an increase in the mean voltage 660, as compared to the voltage caused by background vibrations 650, followed by a gradual decrease in the average voltage 670, as well as a decrease in amplitude of the vibrations more akin to the background vibrations. The increase in mean voltage and subsequent gradual decrease in average voltage 670 is due to the deformation in the vicinity of the second strain gauge 480b. In this case, the deformation is deformation of the junction plates 410a, 410b due to impact with the secondary trunnions 450a, 450b during loading. The actuator will still experience background vibrations 680 after the secondary load path is loaded and these will still be recorded by the second strain gauge 480b, a shown in Fig. 11b.

As explained above, a processor may be provided for processing the measured vibrations. For example, the processor may comprise electronics 504.

The processor is configured to compare the signals 600, 640 received from the first and second strain gauges 480a, 480b respectively and may determine that the primary load path has failed when a difference in amplitude and/or frequency or a difference in amplitude and/or frequency above a predetermined threshold is identified between the respective signals. It will be understood that any suitable processor or arrangement for comparing the respective signals and identifying such a difference in amplitude and or frequency thereof may be used.

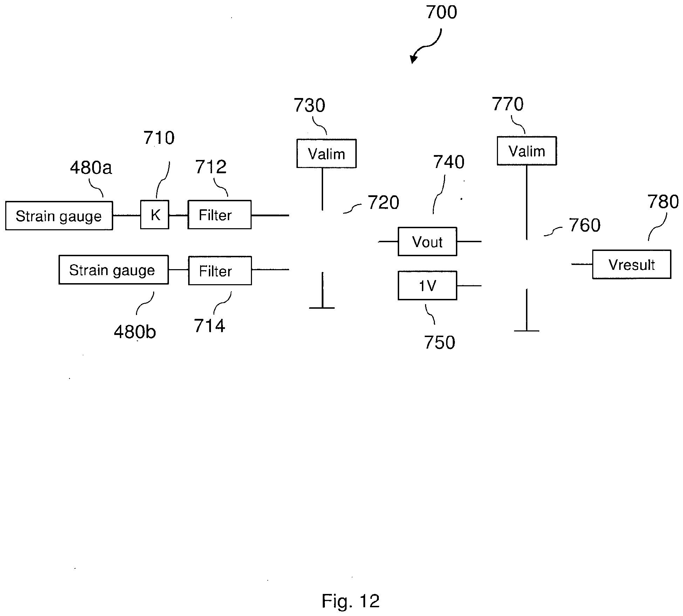

Fig. 12 shows a schematic circuit diagram 700 of one possible example of a processor comprising electronics for comparing the first and second strain gauge signal data. It is expected that the background vibrations 610, 650, 630, 680 measured by the first and second strain gauges 480a, 480a will exhibit similar behaviour, as shown in Figs. 11a, 11b. However, the signal 600 from the first strain gauge 480a is expected to be damped as compared to the signal 640 from the second strain gauge 480b. Accordingly, the electronics may include an amplifier 710 connected in series with an input for the signal from the first strain gauge 480a so that the signal 600 from the first strain gauge 480a may be amplified by a gain (K) of the amplifier 710. Gain 710 is a gain to amplify signal 600. K is preferably 2 to 20, more preferably 5 to 15, more preferably about 10.

The electronics may also comprise first and second filters 712, 714, respectively connected in series with the input for the signal from the first strain gauge 480a (in the example shown after the amplifier 710) and an input for the signal 640 from the second strain gauge 480b. Before comparison, the amplified signal 600 from the first strain gauge 480a and the signal 640 from second strain gauge 480b may therefore be filtered by the first and second filters 712, 714, respectively. The first and second filters 712, 714 may be high-pass, low-pass, bandwidth or band stop filters. The electronics may also comprise a first comparator 720 and a second comparator 760. Once the signals from the first and second strain gauges 480a, 480b have been filtered by the respective filters 712, 714, the signals are compared using the first comparator 720, the inputs of which may be connected to the outputs of the respective first and second filters 712, 714. Power is supplied to the first comparator 720 by a first power supply 730. It is to be understood that the voltage, Valim, supplied to the first comparator 720 by the first power supply 730 will depend on the requirements of the comparator. The voltage supplied may be in the range of 1-30V, 5-25V, or 10-20V. The supplied voltage may be 7.5V. Alternatively, the voltage supplied may be 15V. zero, positive or negative. Vout will be equal to zero if the amplitude of the signals received at the first comparator 720 is equal. Vout will be positive if the signal from the first strain gauge 480a as received at the first comparator 720 is greater than the signal from the second strain gauge 480b received at the first comparator 720. Vout will be negative if the signal from the first strain gauge 480a received at the first comparator 720 is less than the signal from the second strain gauge 480b received at the first comparator 720. Therefore, Vout being positive or negative indicates a difference in the amplitude of the respective signals.

As discussed above, a difference in the signals can be indicative of primary load path failure. However, as also discussed above, the background vibrations 610, 650 prior to primary load path failure are similar, but not always identical. Therefore, Vout will oscillate between the above described positive and negative values before primary load path failure. In this case, even though a difference in the signals has been identified, this is not associated with primary load path failure.

Vout will stop oscillating for a period of time after primary load -path failure and secondary load path loading, therefore the cessation of oscillations for a period of time can be used to identify primary load path failure. This can be understood by considering the signals shown after primary load path failure, in particular, after the sharp increases in voltage shown at the respective peaks 620, 660 of the signals shown in Figs. 11a and 11b respectively.

It can be seen that the signal amplitude due to deformation 670 near the second strain gauge 480b caused by secondary load path loading is, for a period of time, constantly greater than the signal amplitude for the equivalent period of time from the first strain gauge 480a, even accounting for the background vibrations. Therefore, Vout will cease to oscillate during this period of time, thereby being indicative of secondary load path loading.

The electronics may further comprise a second comparator 760. Power is supplied to the second comparator 760 by a second power supply 770. It is to be understood that the voltage, Valim, supplied to the second comparator 760 by the second power supply 770 will depend on the requirements of the comparator. The voltage supplied may be in the range of 1-30V, 5-25V, or 10-20V. The supplied voltage may be 7.5V. Alternatively, the voltage supplied may be 15V.

The second comparator 760 provides means for determining when oscillations in Vout have ceased. That is, when the secondary load path becomes loaded. The second comparator 760 receives two input signals to be compared. The first input signal is Vout 740, as determined by the first comparator 720. The second input signal is a reference signal 750. In this case, a reference signal with constant voltage of 1 V may be used although it will be understood that the amplitude of this signal can be varied as required. The second comparator 760 provides an output Vresult 780 based on the comparison of Vout and the reference signal 750. Vresult will be positive when the secondary load path has become loaded, since the amplitude of Vout will be greater than 1 V and will remain consistently greater than 1V for a period of time. Therefore, such a positive output is indicative of primary load path failure.

In any example of the disclosure, the processor or the electronics 504 may be configured to provide a notification notifying a user when primary load path failure has occurred. In any example of the disclosure, the system or the actuator may comprise transmission means configured to transmit the notification to a user. Additionally, or alternatively, the processor or the electronics may be configured to activate an alarm to notify a user when primary load path failure has occurred. Alternatively, a wired or wireless connection may be provided between the processor and another control system, for example aircraft control systems, such that an output signal from the processor may be provided to the other control system for processing by the other control system.

In any example of the disclosure, the system may be retrofitted to the actuator. In some examples, the system may be retrofitted to the actuator using pre-existing means. That is, existing parts of the actuator may be used to secure the system to the actuator. In the present example, the second housing may be retrofitted to the actuator using one or more fasteners which are used to secure the junction plates and arm portions together. As discussed above, the housing may comprise one or more holes. In the present example, the one or more fasteners may be temporarily removed so that the second housing may be placed in position so that the one or more holes align with the one or more holes from which the fasteners have been removed. The one or more fasteners may then be replaced, so as to pass through the one or more holes in the second housing, and fastened so as to secure the second housing to the actuator. In some examples, the second housing may be further secured with an adhesive, or with adhesive alone.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. A system for identifying a failure of the primary load path in an actuator,
the actuator comprising:
a screw shaft;
a.static portion fixedly attached to the screw shaft; and
a nut assembly moveable along the screw shaft,
wherein the nut assembly is moveable relative to the static portion,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path,
the system comprising:
a first strain gauge configured to be mounted to the static portion and to measure vibrations of the static portion;
a second strain gauge configured to be mounted to the nut assembly and to measure vibrations of the nut assembly; and
a processor configured to identify a failure of the primary load path by comparing the measured vibrations of the static portion and the measured vibrations of the nut assembly.

2. A system as claimed in claim 1, wherein the processor comprises a first comparator for comparing the measured vibrations of the static portion and the measured vibrations of the nut assembly.

3. A system as claimed in claim 2, wherein the processor comprises a second comparator for comparing an output from the first comparator with a reference signal to identify failure of the primary load path.

4. A system as claimed in claim 1, 2 or 3, wherein the processor comprises:
a first filter for filtering the measured vibrations of the static portion; and /or
a second filter for filtering the measured vibrations of the nut assembly; and /or
an amplifier for applying a gain to the measured vibrations of the static portion.

5. A system as claimed in any preceding claim, comprising:
a first housing configured to protect the first strain gauge; and/or
a second housing configured to protect the second strain gauge.

6. A system as claimed in any preceding claim, wherein the system is configured to notify a user when primary load path failure has occurred.

7. An actuator comprising:
a screw shaft;
a static portion fixedly attached to the screw shaft;
a nut assembly moveable along the screw shaft,
wherein the nut assembly is moveable relative to the static portion,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path; and
a system as claimed in any preceding claim, wherein the first strain gauge is mounted to the static portion and the second strain gauge is mounted to the nut assembly.

8. An actuator as claimed in claim 7, wherein the nut assembly comprises a junction plate configured to form a portion of the primary load path in normal operation, and further configured to form a portion of the secondary load path upon failure of the primary load path, and wherein the second strain gauge is mounted on the junction plate.

9. An aircraft comprising a system or an actuator as claimed in any preceding claim.

10. A method for identifying a failure of the primary load path in an actuator, the actuator comprising:
a screw shaft;
a static portion fixedly attached to the screw shaft; and
a nut assembly moveable along the screw shaft,
wherein the nut assembly is moveable relative to the static portion,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path,
the method comprising:
measuring vibrations of the static portion by a first strain gauge mounted to the static portion;
measuring vibrations of the nut assembly by a second strain gauge mounted to the nut assembly; and
comparing the measured vibrations of the static portion and the measured vibrations of the nut assembly to identify a failure of the primary load path.

11. A method as claimed in claim 10, comprising filtering the measured vibrations of the static portion, and/or filtering the measured vibrations of the nut assembly before comparing the measured vibrations.

12. A method as claimed in claim 10 or 11, comprising:
comparing the measured vibrations of the static portion and the measured vibrations of the nut assembly using a first comparator.

13. A method as claimed in claim 12, comprising:
comparing the output from the first comparator with a reference signal using a second comparator to identify failure of the primary load path.

14. A method as claimed in any of claims 10 to 13, comprising amplifying the measured vibrations of the static portion before comparing the measured signals.

15. A method for modifying an actuator, the actuator comprising:
a screw shaft;
a static portion fixedly attached to the screw shaft; and
a nut assembly moveable along the screw shaft,
wherein the nut assembly is moveable relative to the static portion,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path,
the method comprising installing a system as claimed in any of claims 1 to 6 on the actuator,
wherein the step of installing the system comprises mounting the first strain gauge to the static portion and mounting the second strain gauge to the nut assembly.
